# EUROPÄISCHE PATENTANMELDUNG

(11) **EP 1 304 311 A2**
(43) Veröffentlichungstag der Anmeldung: **23.04.2003**
(21) Anmeldenummer: 02022623.9
(22) Anmeldetag: 09.10.2002
(51) Int. Cl.: C01B 3/38, C01B 3/48, C01B 3/58, C01B 3/32, C01B 3/34

(54) **Verfahren zum Betrieb eines Apparates zur Erzeugung von Wasserstoff sowie Apparat zur Erzeugung von Wasserstoff für Brennstoffzellen**

(30) Priorität: 11.10.2001 DE 10149987
(71) Anmelder: Viessmann Werke GmbH & Co, 35107 Allendorf (DE)
(72) Erfinder: Heikrodt, Klaus, Dr., 35108 Allendorf (DE); Dzubiella, Manfred, Dr., 35066 Frankenberg (DE)
(74) Vertreter: Wolf, Günter, Dipl.-Ing.

(57) **Zusammenfassung**

Die Erfindung betrifft einen Apparat zur Erzeugung von Wasserstoff zum Betrieb von Brennstoffzellen und ein entsprechendes Verfahren. Der Apparat umfasst einen Reformer (1) zur Umwandlung von Kohlenwasserstoffgas und Wasser in Wasserstoff und weitere Reformer-Produkte, wobei der Reformer (1) zur Bereitstellung einer definierten Prozesswärmemenge mit einer Wärmequelle (2) versehen ist und wobei dem Reformer (1) zur chemischen Aufbereitung der Reformer-Produkte reaktionsspezifisch angepaßte, wärmeabgebende Katalysatorstufen (3) nachgeschaltet sind. Ferner ist vorrichtungsmäßig vorgesehen, dass die Wärmequelle (2) bezüglich der tatsächlich zur Reformierung erforderlichen Prozesswärmemenge überdimensioniert ausgelegt ist und dass am Apparat Mittel zur Auskopplung einer im Bedarfsfall erzeugten zusätzlichen Wärmemenge vorgesehen sind. Nach der Erfindung ist vorgesehen, dass die mit einem ersten Abgaszug (7) versehene Wärmequelle (2) mit einem zweiten Abgaszug (4) in Verbindung steht, der bedarfsangepaßt verschliessbar ausgebildet und mit mindestens einem Wärmetauscher (5) zur definierten Auskopplung der im Bedarfsfall zusätzlich freigesetzten Wärmemenge versehen ist.

## Beschreibung

Die Erfindung betrifft ein Verfahren zum Betrieb eines Apparats zur Erzeugung von Wasserstoff gemäß dem Oberbegriff des Anspruchs 1 sowie einen Apparat zur Erzeugung von Wasserstoff zum Betrieb von Brennstoffzellen gemäß dem Oberbegriff des Anspruchs 2.

Aus der DE 100 57 537 A1 ist ein solcher, gattungsgemäßer Apparat zur Erzeugung von Wasserstoff sowie ein entsprechendes Verfahren zu dessen Betrieb bekannt. Dieser Apparat weist einen Reformer auf, der dazu dient, Kohlenwasserstoffgas und Wasser in Wasserstoff und weitere Reformer-Produkte umzuwandeln. Der Reformer besteht dabei, zunächst ganz prinzipiell betrachtet, aus einem Katalysator, der bei einer Temperatur von etwa 850° C den Reformierungsprozess der zusammengeführten Edukte bewirkt. Die dazu erforderliche Wärme wird bei einer speziellen Ausführungsform mit Hilfe eines Gasbrenners erzeugt, der im Bereich des Reformerkatalysators angeordnet ist. Der Gasbrenner wird mit einem Teil des auch für die Reformierung vorgesehenen Kohlenwasserstoffgases betrieben, d.h. das Kohlenwasserstoffgas wird anteilig dem Gasbrenner und dem Reformer zugeführt. Der Anteil für den Gasbrenner ist dabei stets so gewählt, dass dessen Verbrennung gerade die für die Reformierung erforderliche Wärmeleistung erbringt.

Der Apparat gemäß der DE 100 57 537 A1 ist insbesondere zur effizienten Erzeugung von Wasserstoff zum Betrieb von Brennstoffzellen vorgesehen, wobei darüber hinaus aber auch schon dem Aspekt einer möglichst kompakten Anordnung der Systemkomponenten Rechnung getragen wurde. Da Brennstoffzellen typischer Weise aber insbesondere bzw. vorwiegend zur Erzeugung von Strom verwendet werden, ist ein Einsatz dieses Apparats beispielsweise im Sinne eines klassischen Heizkessels mit der Aufgabe, Wärme für ein Haus bereitzustellen und nebenbei auch noch den Strombedarf zu decken, nicht vorgesehen bzw. auch gar nicht möglich.

Der Erfindung liegt demgemäß die Aufgabe zugrunde, einen Apparat der eingangs genannten Art sowie eine Verfahren zum Betrieb eines solchen Apparats dahingehend weiter zu entwickeln, dass mit dessen Hilfe neben der klassischen Stromerzeugung auch der typischer Weise in Gebäuden anfallende Wärmebedarf gedeckt werden kann.

Diese Aufgabe ist mit einem Verfahren der eingangs genannten Art durch die im Kennzeichen des Anspruchs 1 genannten Merkmale und bezüglich des Apparats durch die im Kennzeichen des Anspruchs 2 genannten Merkmale gelöst.

Der Erfindung liegt also der Gedanke zugrunde, die vom Brenner für den Reformierungsprozess erbrachte Wärmeleistung durch Vergrößerung der Brennstoffzufuhr zu erhöhen und die dabei entstehende, für die Reformierung nicht erforderliche Wärme anschliessend aus dem System auszukoppeln.

Hierzu ist neben dem einen ohnehin vorhandenen Rauchgasabzug am Brenner ein weiterer, mit einem Wärmetauscher versehener Abgaszug vorgesehen, der über entsprechende Stellmittel freigegeben wird, sobald der Brenner in einer Leistungsstufe arbeitet, die über die bei der Reformierung erforderliche Wärmeleistung hinausgeht. In dieser Spitzenlast-Leistungsstufe wird also ein Teil des heissen Abgases überhaupt nicht für den Reformierungsprozess eingesetzt, sondern direkt über den zweiten Abgaszug einem Wärmetauscher zugeführt, der beispielsweise mit dem Heizkreis eines zu beheizenden Gebäudes verbunden ist.

Diese Lösung stellt also gewissermaßen eine Kombination aus einem Apparat zur Erzeugung von Wasserstoff und einem Heizkessel dar. Die Wärme des Heizkessels kann zum Beheizen eines Hauses und der Wasserstoff über eine Brennstoffzelle zur Bereitstellung von Strom genutzt werden, und zwar bedarfsangepaßt, d.h. der Apparat ermöglich es, den zu unterschiedlichen Zeiten und den bei unterschiedlichen Konstellationen (Sommer, Winter, mit und ohne Warmwasserbereitstellung etc.) bestehenden Bedarf an Wärme und Strom jeweils durch entsprechende Einstellung des Verhältnisses zwischen reiner Heizleistung und Wasserstofferzeugung exakt zu decken. Der Apparat ermöglicht somit auf einfachste Art und Weise eine Lösung eines Zielkonflikts bei der Bereitstellung von Wärme und Strom.

Vorteilhafte Weiterbildungen ergeben sich aus den abhängigen Ansprüchen.

Das erfindungsgemäße Verfahren sowie der dazugehörige Apparat und seine vorteilhaften Weiterbildungen werden nachfolgend anhand der zeichnerischen Darstellung von Ausführungsbeispielen näher erläutert.

Es zeigt jeweils schematisch
- Fig. 1: einen Schaltplan einer Ausführungsform mit einem zweiten Abgaszug zur Auskopplung der zusätzlich eingebrachten Wärmeleistung;
- Fig. 2: eine mögliche konstruktive Gestaltung des Apparats gemäß Fig. 1 mit Klappe am zweiten Abgaszug; und
- Fig. 3: eine weitere Ausführungsform mit Stellklappe zur bedarfsangepaßten Aufteilung des Abgasstromes.

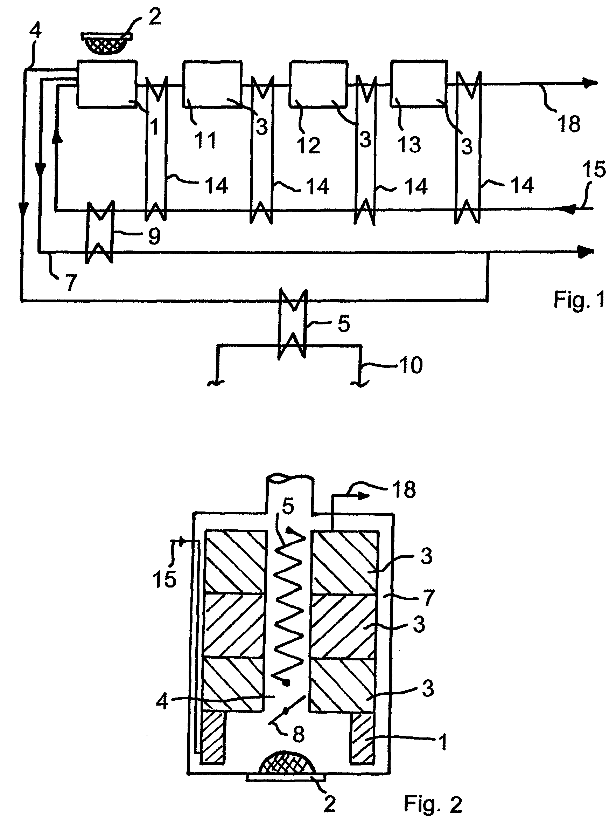

In Fig. 1 ist ein Schaltplan eines Apparats zur Erzeugung von Wasserstoff zum Betrieb von Brennstoffzellen dargestellt. Dieser besteht unter anderem aus einen Reformer 1 zur Umwandlung von Kohlenwasserstoffgas und Wasser in Wasserstoff und weitere Reformer-Produkte, wobei der Reformer 1 zur Bereitstellung einer definierten Prozesswärmemenge mit einer als Brenner ausgebildeten Wärmequelle 2 versehen ist und wobei dem Reformer 1 zur chemischen Aufbereitung der Reformer-Produkte reaktionsspezifisch angepaßte, wärmeabgebende Katalysatorstufen 3 nachgeschaltet sind. Als Brenner kommt dabei, wie dargestellt, vorzugsweise ein halbkugelförmiger Gasflächenbrenner zum Einsatz. Bei den drei dargestellten Katalysatorstufen handelt es sich typischerweise um die sogenannte Hochtemperatur- 11 und Niedertemperatur-Shiftstufe 12 sowie die SelOx-Stufe 13; genauso gut sind aber auch zusammengefaßt ausgebildete Shiftstufen verwendbar.

Zwischen den einzelnen Katalysatorstufen sind Wärmetauscher 14 angeordnet, die einerseits für die erforderliche Abkühlung der Wärme abgebenden Shiftstufen sorgen und die andererseits dazu dienen, die Edukte Kohlenwasserstoffgas und Wasser vor dem Eintritt in den Reformer 1 vorzuheizen.

Wesentlich für die dargestellte Ausführungsform ist nun, dass die Wärmequelle 2 bezüglich der tatsächlich zur Reformierung erforderlichen Prozesswärmemenge überdimensioniert ausgelegt ist und dass am Apparat Mittel zur Auskopplung einer im Bedarfsfall erzeugten zusätzlichen Wärmemenge vorgesehen sind.

Hinsichtlich des in Fig. 1 dargestellten Apparats ist die erfindungsgemäße Lehre dadurch realisiert, dass die als Brenner ausgebildete und mit einem ersten Abgaszug 7 versehene Wärmequelle 2 mit einem zweiten Abgaszug 4 in Verbindung steht, der bedarfsangepaßt verschliessbar ausgebildet und mit mindestens einem Wärmetauscher 5 zur definierten Auskopplung der im Bedarfsfall zusätzlich freigesetzten Wärmemenge versehen ist.

Der Apparat gemäß Fig. 1 funktioniert wie folgt: Über den Zufuhranschluss 15 gelangt Kohlenwasserstoffgas und Wasser in die Eduktvorheizstrecke, der Wärme nicht nur über die Wärmetauscher 14, sondern auch über den Wärmetauscher 9 zugeführt wird. Dieser steht in Kontakt mit dem ersten Abgaszug 7, der dafür vorgesehen ist, die beim reinen Reformierungsprozess anfallenden Abgase aus dem Apparat abzuführen. Zur Abfuhr der zusätzlich vom Brenner erbrachten Wärmeleistung dient der zweite Abgaszug 4, der, wie in Fig. 2 dargestellt, vorzugsweise mit einer schwenkbaren Klappe 8 verschließbar und in dem ein weiterer, mit einem Heizkreis 10 verbundener Wärmetauscher 5 zur Aufnahme der freigesetzten Wärme angeordnet ist. Die Klappe 8 ist dabei bei der bevorzugten Ausführungsform gemäß Fig. 2 zwischen dem Brenner und dem Wärmetauscher 5 angeordnet, so dass bei geschlossener Klappe 8 der dann in einer ersten Leistungsstufe arbeitende Brenner seine Wärme ausschließlich für den Reformierungsprozess bereitstellt, während in einer zweiten Leistungsstufe ein großer Teil der Heizgase bei geöffneter Klappe 8 direkt, und ohne am Reformierungsprozess beteiligt zu sein, dem Heizkreis 10 zugeführt wird. Die zweite Leistungsstufe entspricht damit gewissermaßen dem Brennerbetrieb eines typischen Heizkessels verbunden mit einem Reformerprozess zur Erzeugung von Wasserstoff.

Hinsichtlich der konstruktiven Gestaltung eines solchen Apparats ist, wie in Fig. 2 dargestellt, vorteilhaft vorgesehen, dass sowohl der Reformer 1 als auch die Katalysatorstufen 3 ringförmig ausgebildet sind und zumindest teilweise den zweiten Abgaszug 4 konzentrisch umschließen.

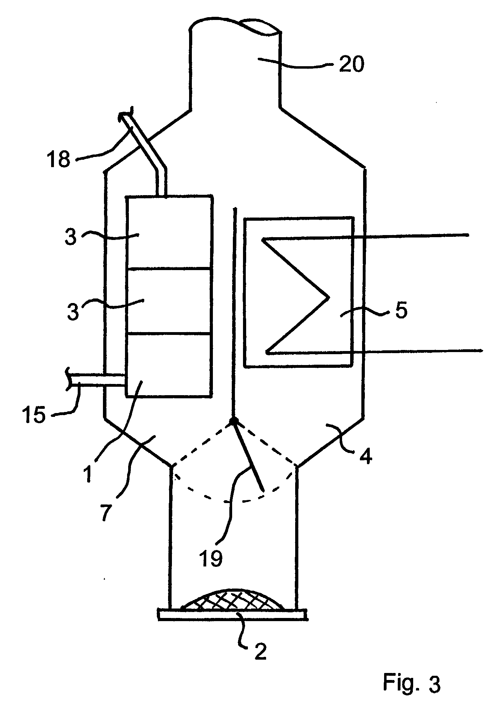

Bei der Ausführungsform gemäß Fig. 3 ist vorgesehen, dass der erste Abgaszug 7 vollständig verschließbar ausgebildet ist, so dass vom Brenner kommendes Abgas wahlweise vollständig über den ersten 7, den zweiten 4 oder nach Bedarf aufgeteilt über beide Abgaszüge 4, 7 abführbar ist. Dazu ist am Apparat vorzugsweise eine verstellbare Klappe 19 angeordnet, mit der in einer ersten Stellung der zweite Abgaszug 4 und in einer zweiten Stellung der erste Abgaszug 7 vollständig verschließbar (gestrichelt angedeutet) und mit der in einer variablen Zwischenstellung - wie dargestellt - das Abgas auf beide Abgaszüge 4, 7 bedarfsangepaßt aufteilbar ist.

Bei diesem Apparat strömt also das heiße Abgas vom Brenner 2 zunächst auf die Klappe 19 zu. Dort wird es, je nach Klappenstellung auf die Abgaszüge 4, 7 aufgeteilt, wobei bei verschlossenem Abgaszug 7 auch ein reiner Heizbetrieb ohne Wasserstofferzeugung und damit Brennstoffzellenbetrieb möglich ist. Bei geschlossenem Abgaszug 4 strömt das Abgas dagegen ausschließlich seitlich am Reformer 1 und den Shiftstufen 3 vorbei. Wie in Fig. 2 werden dem Reformer die Edukte über den Zufuhranschluss 15 zugeführt. An die Shiftstufen 3 schließt sich eine Produktabfuhranschluss 18 an.

Nach bedarfsentsprechender Passage der Abgaszüge 4, 7 gelangt das Abgas dann schließlich zu einem gemeinsamen Abgasabzugskanal 20, der in entsprechender Weise auch in Fig. 2 zu erkennen ist.

### Bezugszeichenliste

- 1: Reformer
- 2: Wärmequelle
- 3: Katalysatorstufen
- 4: Abgaszug
- 5: Wärmetauscher
- 6: Wärmetauscher
- 7: Abgaszug
- 8: Klappe
- 9: Wärmetauscher
- 10: Heizkreis
- 11: Hochtemperatur-Shiftstufe
- 12: Niedertemperatur-Shiftstufe
- 13: SelOx-Stufe
- 14: Wärmetauscher
- 15: Zufuhranschluss
- 16: Wasseranschluss
- 17: Abfuhranschluss
- 18: Produktanschluss
- 19: Klappe
- 20: Abgasabzugskanal

## Patentansprüche

1. Verfahren zum Betrieb eines Apparats zur Erzeugung von Wasserstoff zum Betrieb von Brennstoffzellen, bei dem einem Reformer (1) mit nachgeschalteten Katalysatorstufen (3) zur Umwandlung von Kohlenwasserstoffgas und Wasser in Wasserstoff und weitere Reformer-Produkte von einer als Brenner ausgebildeten Wärmequelle (2) eine definierte Prozesswärmemenge zugeführt wird, wobei im Bedarfsfall mittels der Wärmequelle (2) neben der erforderlichen Prozesswärmemenge eine zusätzliche Wärmemenge freisetzbar ist, die dem Apparat bezüglich des Reformerprozesses beeinträchtigungsfrei entzogen wird und einem separaten Verwendungszweck zuführbar ist,
**dadurch gekennzeichnet,**
**dass** im Bedarfsfall ein zusätzlicher Abgaszug (4) definiert geöffnet wird, um die zusätzlich freigesetzte Wärmemenge bezüglich des Reformerprozesses beeinträchtigungsfrei mittels eines im Abgaszug (4) angeordneten Wärmetauschers (5) auszukoppeln.

2. Apparat zur Erzeugung von Wasserstoff zum Betrieb von Brennstoffzellen, umfassend einen Reformer (1) zur Umwandlung von Kohlenwasserstoffgas und Wasser in Wasserstoff und weitere Reformer-Produkte, wobei der Reformer (1) zur Bereitstellung einer definierten Prozesswärmemenge mit einer als Brenner ausgebildeten Wärmequelle (2) versehen ist und wobei dem Reformer (1) zur chemischen Aufbereitung der Reformer-Produkte reaktionsspezifisch angepaßte, wärmeabgebende Katalysatorstufen (3) nachgeschaltet sind, wobei die Wärmequelle (2) bezüglich der tatsächlich zur Reformierung erforderlichen Prozesswärmemenge überdimensioniert ausgelegt ist und am Apparat Mittel zur bezüglich der Reformierung beeinträchtigungsfreien Auskopplung einer im Bedarfsfall erzeugten zusätzlichen Wärmemenge vorgesehen sind,
**dadurch gekennzeichnet,**
**dass** die mit einem ersten Abgaszug (7) versehene Wärmequelle (2) mit einem zweiten Abgaszug (4) in Verbindung steht, der bedarfsangepaßt verschliessbar ausgebildet und mit mindestens einem Wärmetauscher (5) zur definierten Auskopplung der im Bedarfsfall zusätzlich freigesetzten Wärmemenge versehen ist.

3. Apparat nach Anspruch 2,
**dadurch gekennzeichnet,**
**dass** sowohl der Reformer (1) als auch die Katalysatorstufen (3) ringförmig ausgebildet sind und zumindest teilweise den zweiten Abgaszug (4) konzentrisch umschließen.

4. Apparat nach Anspruch 3,
**dadurch gekennzeichnet,**
**dass** der zweite Abgaszug (4) mittels einer schwenkbaren Klappe (8) verschliessbar ausgebildet ist.

5. Apparat nach Anspruch 4,
**dadurch gekennzeichnet,**
**dass** die Klappe (8) zwischen der als Brenner ausgebildeten Wärmequelle (2) und dem mindestens einen im zweiten Abgaszug (4) angeordneten Wärmetauscher (5) angeordnet ist.

6. Apparat nach einem der Ansprüche 2 bis 5,
**dadurch gekennzeichnet,**
**dass** der erste Abgaszug (7) zur Vorwärmung des Kohlenwasserstoffgases und des Wassers mit einem Wärmetauscher (9) versehen ist.

7. Apparat nach einem der Ansprüche 2 bis 6,
**dadurch gekennzeichnet,**
**dass** der erste Abgaszug (7) verschließbar ausgebildet ist, so dass vom Brenner kommendes Abgas wahlweise vollständig über den ersten (7), den zweiten (4) oder nach Bedarf aufgeteilt über beide Abgaszüge (4, 7) abführbar ist.

8. Apparat nach Anspruch 7,
**dadurch gekennzeichnet,**
**dass** am Apparat eine verstellbare Klappe (19) vorgesehen ist, mit der in einer ersten Stellung der zweite Abgaszug (4) und in einer zweiten Stellung der erste Abgaszug (7) vollständig verschließbar und mit der in einer variablen Zwischenstellung das Abgas auf beide Abgaszüge (4, 7) bedarfsangepaßt aufteilbar ist.
